(19) Europäisches Patentamt

European Patent Office

Office européen des brevets

(11) **EP 2 212 620 B1**

(12) **FASCICULE DE BREVET EUROPEEN**

(45) Date de publication et mention de la délivrance du brevet:
**01.08.2018 Bulletin 2018/31**

(21) Numéro de dépôt: **08857211.0**

(22) Date de dépôt: **21.11.2008**

(51) Int Cl.:
**F23D 14/32** *(2006.01)*   **F23M 5/02** *(2006.01)*
**C03B 7/06** *(2006.01)*

(86) Numéro de dépôt international:
**PCT/FR2008/052097**

(87) Numéro de publication internationale:
**WO 2009/071811 (11.06.2009 Gazette 2009/24)**

(54) **PROCÉDÉ ET SYSTÈME DE COMBUSTION**

VERBRENNUNGSVERFAHREN UND -SYSTEM

COMBUSTION METHOD AND SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.11.2007 FR 0759283**

(43) Date de publication de la demande:
**04.08.2010 Bulletin 2010/31**

(73) Titulaire: **L'Air Liquide Société Anonyme pour l'Etude et
l'Exploitation des Procédés Georges Claude
75007 Paris (FR)**

(72) Inventeurs:
• **KALCEVIC, Robert
  F-78000 Versailles (FR)**

• **LAURENT, Jacky
  F-78210 Saint-Cyr l'Ecole (FR)**
• **LEROUX, Bertrand
  F-91310 Linas (FR)**
• **TSIAVA, Rémi
  F-91250 Saint Germain-les-Corbeil (FR)**

(74) Mandataire: **De Vleeschauwer, Natalie Y.L.D.
L'Air Liquide S.A.
Direction Propriété Intellectuelle
75 Quai d'Orsay
75321 Paris Cedex 07 (FR)**

(56) Documents cités:
**DE-A1-102005 005 735    FR-A- 2 735 122
US-A- 6 029 910          US-B1- 6 233 974
US-B1- 6 431 467**

EP 2 212 620 B1

**Description**

La présente invention concerne un procédé pour le chauffage par oxycombustion d'une matière présente dans une zone de chauffage, telle que les canaux de distribution et en particulier les canaux de distribution pour le conditionnement du verre.

Les brûleurs sont communément utilisés comme système de chauffage pour le chauffage d'une matière présente dans une zone de chauffage.

Dans le présent contexte, le terme chauffage couvre non seulement l'apport d'énergie à une matière pour en faire monter la température, mais également les procédés d'apport d'énergie visant à maintenir ou à contrôler la température de cette matière, par exemple afin d'obtenir ou maintenir une température plus homogène à travers la matière.

Un brûleur est un dispositif utilisé pour réunir un combustible et un comburant en vue de leur combustion. Le combustible et le comburant sont usuellement véhiculés vers la zone de chauffage à travers le brûleur depuis l'extérieur de l'enceinte définissant la zone de chauffage.

L'air est le comburant traditionnellement utilisé. La combustion avec de l'air comme comburant est appelée l'aérocombustion.

Pour augmenter l'efficacité énergétique des brûleurs et pour diminuer la quantité de polluants et notamment de NOx produits, l'air comme comburant peut être avantageusement remplacé par de l'air enrichi en oxygène ou par de l'oxygène plus ou moins pur. La combustion est alors appelée oxycombustion et les brûleurs correspondants des oxybrûleurs.

Ce changement de comburant a pour effet de modifier les caractéristiques de la combustion et a fortiori celles de la flamme.

Lors d'un changement de l'aérocombustion vers l'oxycombustion, la température de la flamme devient plus importante. Le transfert radiatif devient plus intense et s'exerce en partie dans une autre gamme de longueurs d'onde. L'ensemble de ces éléments contribue à une amélioration du transfert thermique entre la flamme et la matière à chauffer.

Selon l'application visée, les brûleurs sont choisis en fonction de leur puissance et/ou de la forme de leur flamme.

Par exemple, dans le cas d'un four de fusion, le ou les brûleurs apportent à la charge solide l'énergie de chauffage et de fusion nécessaire pour sa fusion. Pour une telle application, on utilise dès lors généralement des brûleurs de puissance élevée et dont les flammes sont susceptibles de couvrir une partie significative, voire la totalité, de la surface libre de la matière à fondre dans la zone considérée du four.

Dans le cas des canaux de distribution qui transportent la matière fondue en provenance du four de fusion vers les installations en aval, tels qu'en particulier des machines de mise en forme, le ou les brûleurs fournissent l'énergie nécessaire pour qu'à l'entrée de l'installation (de mise en forme) en aval, la matière fondue présente des propriétés homogènes telle que la température, la viscosité, ... appropriées pour son traitement dans l'installation avale. Les canaux de distribution peuvent notamment être équipés de brûleurs qui visent à compenser les pertes de chaleur à travers les parois des canaux de manière à réduire l'hétérogénéité, notamment en termes de température de la matière fondue selon la section transversale des canaux de distribution. Les brûleurs des canaux de distribution sont dès lors en règle générale des brûleurs de basse puissance dont la flamme est limitée à une zone à proximité des parois du canal.

Ce qui plus est, dans le cas d'une flamme dans un canal de distribution qui s'étend au-delà de la zone à proximité des parois du canal et qui de ce fait chauffe également la matière fondue dans la zone centrale du canal entraîne un risque important du phénomène de rebullage de la matière fondue dans cette zone et donc d'un produit final présentant des inhomogénéités et des défauts correspondants.

La puissance d'un brûleur et la forme de la flamme obtenue dépendent essentiellement de la conception ou du design du brûleur et de la nature et des débits de combustible et de comburant.

L'injecteur (ou nez) d'un oxybrûleur est généralement réalisé en matière métallique (acier ou acier réfractaire par exemple) et est souvent disposé à l'intérieur d'un bloc ouvreau en matériaux réfractaires.

Pour les applications industrielles, la durabilité et la fiabilité et la performance énergétique sont des propriétés particulièrement importantes pour un brûleur.

Par ailleurs, il est souhaitable de pouvoir utiliser un même brûleur ou un même type de brûleur à des puissances différentes selon les caractéristiques techniques du procédé dans lequel le ou les brûleurs sont utilisés et/ou de manière à pouvoir tenir compte du vieillissement de la chambre définissant la zone de chauffage.

En pratique, on constate que les températures élevées rencontrées lors du procédé de chauffage par oxycombustion limitent la durabilité (durée de vie) du brûleur lorsque le brûleur n'est pas utilisé correctement.

Par exemple, une montée en température excessive du nez du brûleur peut conduire à la dégradation rapide de ce dernier nécessitant une mise hors fonction du brûleur. Pour limiter ce risque, le nez du brûleur est généralement situé en retrait dans le bloc ouvreau.

Toutefois, cette configuration peut aussi avoir pour effet une augmentation très importante de la température du bloc et la formation de points chauds dans le bloc et/ou à l'apparition de zones de fusion du bloc susceptible d'entraîner une mise hors fonction du bloc et du brûleur.

Un autre problème rencontré avec ce type de brûleur est un manque de fiabilité ou performance énergétique régulière dû à la formation de dépôts.

En effet, une formation de suie avec dépôt de carbone sur l'injecteur du combustible est souvent accompagnée d'une modification de la position de la flamme étant donné la modification du centrage et/ou de la géométrie de la flamme; et donc d'une modification de l'efficacité du procédé de chauffage.

Par ailleurs, une telle modification de la position de la flamme à cause d'une formation de suie sur le nez du brûleur peut aussi induire une zone de surchauffe ou de fusion sur le bloc et donc limiter la durabilité du bloc et parfois aussi du brûleur.

Enfin, des matières volatiles provenant de la zone de chauffage peuvent venir se déposer dans le bloc ou sur le nez du brûleur. Un dépôt important de matières volatiles dans le bloc/sur le nez peut également engendrer une déviation de la flamme qui, comme explicité précédemment pour les dépôts de carbone, réduit la fiabilité du brûleur voire aussi sa durabilité.

La présente invention à pour but de remédier aux inconvénients susmentionnés des brûleurs au moyen d'un procédé et d'un système de chauffage optimisés aptes à être utilisés pour le chauffage d'une matière fondue dans des canaux de distribution. Le document FR-2735122 décrit un dispositif de combustion pour fours de fusion de verre, utilisant un bloc brûleur connu. DE-A-102005005735 décrit un procédé pour le chauffage d'un four industriel au moyen d'un brûleur de type tube-dans-tube. Le brûleur présente un injecteur central de combustible entouré d'un injecteur annulaire d'oxydant gazeux, ainsi qu'une chambre cylindrique dit de mélange et combustion entre les injecteurs et l'ouverture de sortie du brûleur. La combustion qui démarre dans la chambre cylindrique (précombustion) est retardée grâce à des densités d'impulsion similaires du combustible et de l'oxydant. Le volume interne limité de la chambre du brûleur, sa forme cylindrique et son diamètre qui est proche du diamètre du tuyau extérieur du brûleur limite le degré de précombustion dans la chambre et empêche des turbulences et la recirculation des gaz dans la chambre comme c'est le cas avec des chambres coniques de brûleur. Une impulsion totale élevée de l'oxydant et du combustible à la sortie du brûleur et la sélection de la densité de puissance à la sortie du brûleur résultent en une aspiration importante de fumées dans le four dans la zone de réaction de la flamme, de manière à baisser la température de la flamme et à réduire la formation de NOx et de CO. Le résultat est un chauffage uniforme de la charge dans le four. Le procédé selon DE-A-102005005735 est par conséquent particulièrement adapté pour des fours de fusion tels que les fours de fusion de verre.

Ce procédé est, par contre, peu adapté pour une application dans des canaux de distribution où, comme indiqué ci-dessus, un chauffage uniquement localisé à proximité des parois est recherché.

L'invention est décrite ci-après en se référant aux figures 1 à 6 dans lesquelles :

- la figure 1 représente en en vue de coupe un canal de distribution de verre avec les positions du bain de verre et des blocs ;
- la figure 2 est un schéma d'un bloc ouvreau utilisé dans les canaux de distribution de verre, avec la position du nez du brûleur et celle de la flamme,
- la figure 3 est une représentation schématique d'un bloc où sont indiquées les grandeurs utilisées pour le calcul de l'indice de fonctionnement, ledit indice sera explicité dans la suite du présent document.
- la figure 4 représente la matrice de fonctionnement d'un brûleur suivant l'invention en fonction de l'impulsion de combustible $I_F$ et de l'impulsion de comburant $I_{OX}$,
- la figure 5 représente une vue agrandie de la figure 4 autour de la zone I ; les valeurs de FM et Fm, qui seront explicitées dans la suite du document, sont données pour différentes combinaisons des impulsions de comburant et de combustible,
- la figure 6 est un schéma d'un injecteur de brûleur tube dans tube avec l'injection du combustible au centre par le biais d'un foret pour la création d'un mouvement de rotation, le comburant étant injecté sur la périphérie.

La présente invention concerne un procédé pour le chauffage d'une matière présente dans une zone de chauffage, et ceci par la combustion d'un combustible avec un comburant au moyen d'un brûleur qui comporte un injecteur disposé à l'intérieur d'un bloc.

La combustion étant une oxycombustion, le comburant présente une teneur en oxygène supérieure ou égale à 50% vol.

Le bloc définit un passage d'entrée et une chambre de bloc. Ledit passage d'entrée a une extrémité d'entrée et une extrémité de sortie. Le passage d'entrée débouche par son extrémité de sortie dans la chambre du bloc.

Ladite chambre du bloc comporte un cône aval et débouche par ce cône aval dans la zone de chauffage où se trouve la matière à chauffer.

L'injecteur du brûleur est monté dans le passage d'entrée jusqu'à l'extrémité de sortie du passage d'entrée directement en amont de la chambre. Ainsi, le comburant et le combustible véhiculés à travers l'injecteur entrent dans le bloc par l'extrémité d'entrée du passage d'entrée et sortent de l'injecteur à l'extrémité de sortie dudit passage de manière à être injectés dans la chambre du bloc.

Selon l'invention, la chambre du bloc présente un indice de confinement $I_{conf} \geq 0,10$. Cet indice de confinement $I_{conf}$ répond à la formule suivante :

$$I_{conf} = (S/S') \text{ x } (L/L') \text{ x } (1/(1+ \alpha/100)),$$

dans laquelle :

- « L' » est la longueur la plus longue du cône aval exprimée en m,

- « L » est la longueur la plus courte du cône aval exprimée en m,
- « S » est la section la plus petite du cône aval exprimée en m$^2$,
- « S' » est la section du cône aval à sa longueur L la plus courte exprimée en m$^2$,
- « $\alpha$ » est l'angle du cône aval exprimé en ° (degré).

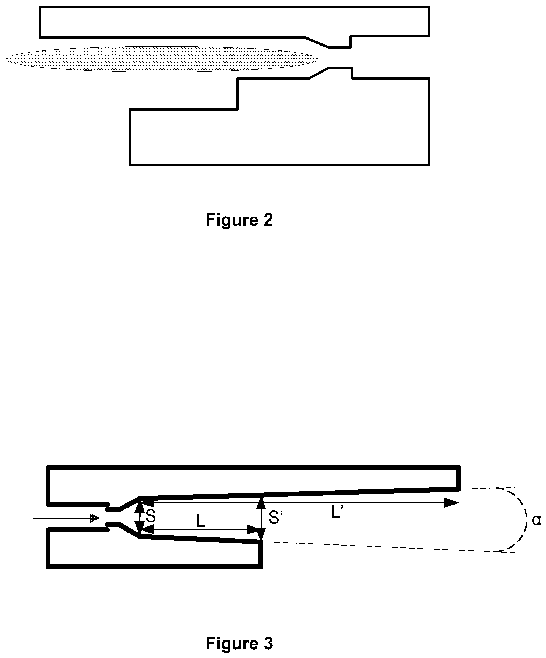

Les différentes grandeurs L', L, S, S' et $\alpha$ sont représentées dans la figure 3.

L'indice de confinement traduit le degré de confinement de la flamme à l'intérieur du bloc. Plus la valeur de l'indice est élevée, plus la flamme sera confinée à l'intérieur de la chambre du bloc.

L'angle $\alpha$ est de 1° à 16°.

Egalement selon l'invention, le combustible est injecté par l'injecteur dans la chambre du bloc avec une impulsion $I_F$ à la sortie de l'injecteur et le comburant est injecté dans la chambre du bloc par l'injecteur avec une impulsion $I_{OX}$ à la sortie de l'injecteur de manière à ce que $0,7 \leq I_F \leq 3,6$ et $0,3 \leq I_{OX} \leq 5,1$, pourvu que quand $I_{OX} > 3,8$ alors $I_F \leq 3,3$.

De manière avantageuse $I_F \geq 1,8$.

De préférence, quand $I_{OX} < 1,1$, alors $I_F \geq 2,2$ et quand $I_{OX} > 4,3$, alors $I_F \geq 2,0$.

Dans le présent contexte, l'impulsion (exprimée en milliNewton : mN) d'un fluide à la sortie de l'injecteur est définie comme par la formule $I = Q_m \times V_s$, dans laquelle :

- $Q_m$ est le débit massique du fluide en question à travers l'injecteur et
- $V_s$ est la vitesse dudit fluide dans la section de sortie de l'injecteur.

On remarquera que, pour un débit massique $Q_m$ et une pression d'alimentation donnée, la vitesse $V_s$, et donc également l'impulsion I, du fluide dépendra de la section par laquelle le fluide quitte l'injecteur du brûleur.

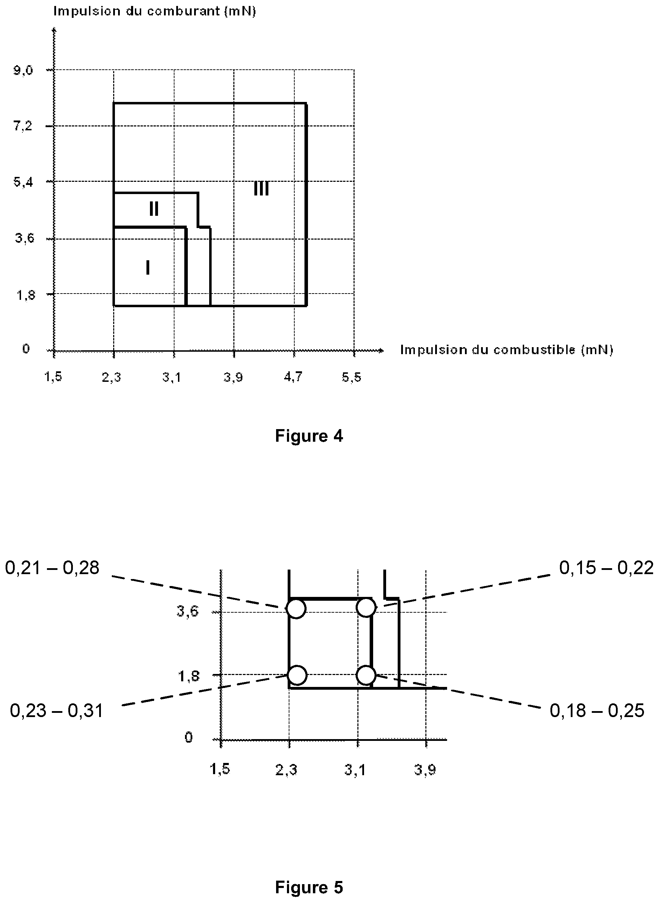

Les plages citées ci-dessus pour l'impulsion de combustible $I_F$ et pour l'impulsion de comburant $I_{OX}$ à la sortie de l'injecteur correspondent aux zones I et IIdans la figure 4.

Suivant une forme de mise en oeuvre préférée de l'invention, $2,3 \leq I_F \leq 3,3$ et $1,8 \leq I_{OX} \leq 3,8$, ce qui correspond à la zone I de la figure 4.

L'invention permet ainsi d'améliorer la durabilité et la fiabilité du bloc et du brûleur, ainsi que la performance énergétique du brûleur ou, dans le cas d'un retrofit, de remplacer un brûleur existant par un brûleur plus durable et plus fiable et plus performant énergétiquement (ou encore de remplacer l'injecteur d'un brûleur existant de manière à obtenir un brûleur plus durable et fiable. En effet, le retrofit impose des conditions supplémentaires car il s'agit d'appliquer le procédé dans des installations existantes et les opérateurs de ces installations, et notamment des installations verrières, sont généralement davantage favorables à changer les injecteurs uniquement plutôt que de changer aussi les blocs réfractaires, voire d'autres éléments de la zone de chauffage, étant donné l'important coût financier que cela représenterait.

Dans la figure 4, la zone III correspond à :

- une combinaison d'impulsion élevée de combustible et d'impulsion élevée de comburant, ou
- une combinaison d'impulsion élevée de l'un des réactifs et d'impulsion beaucoup plus faible de l'autre réactif.

Le fonctionnement du brûleur dans ces conditions présente un risque élevé d'augmentation de température du nez du brûleur et à fortiori un risque de formation de suie (dépôt de carbone) sur le nez du brûleur et de dégradation du bloc ouvreau.

A contrario, la zone I est la zone à privilégier et correspond à une combinaison d'impulsion relativement faible de combustible et d'impulsion relativement faible de comburant.

Le fonctionnement du brûleur dans ces conditions a pour conséquence l'obtention d'une flamme relativement plus longue mais toujours significativement confinée dans la chambre du bloc, ce qui permet de mieux transférer l'énergie à la matière à chauffer en sortie du bloc, mais toujours à proximité dudit bloc. Le risque de formation de suie sur le nez du brûleur ou de dégradation du bloc est significativement réduit en comparaison avec le fonctionnement d'un brûleur dans la zone III.

Enfin la zone II correspond à un fonctionnement intermédiaire ; le risque de dégradation du nez du brûleur et du bloc est réduit par rapport à la zone III, mais plus élevé que dans la zone I préférée.

Pour diverses applications, l'indice de confinement $I_{conf}$ est de manière utile inférieur ou égale à 0,35.

Pour une durabilité et une fiabilité et une performance énergétique encore plus optimisées du brûleur, la longueur maximale du cône ne doit pas dépasser une valeur maximale qui est fonction des impulsions du comburant et du combustible.

Ainsi, suivant une forme de réalisation avantageuse de l'invention :

- quand $I_{conf} \leq 0,15$, L' $\leq (1/0,8) \times FM(I_F, I_{OX})$,
- quand $0,25 \leq I_{conf}$, L' $\leq (1/0,8) \times Fm(I_F, I_{OX})$, et
- quand $0,15 \leq I_{conf} \leq 0,25$, L' $\leq (1/0,8) \times \{FM(I_F, I_{OX}) - 10 \times (I_{conf} - 0,15) \times [FM(I_F, I_{OX}) - FM(I_F, I_{OX})]\}$,

$$FM(I_F, I_{OX}) = 0,60$$

et

$$Fm(I_F, I_{OX}) = 0,45.$$

De préférence :

- quand $I_{conf} \leq 0,15$, L' $\leq (1/0,9)$ x $FM(I_F, I_{OX})$,
- quand $0,25 \leq I_{conf}$, L' $\leq (1/0,9)$ x $Fm(I_F, I_{OX})$, et
- quand $0,15 \leq I_{conf} \leq 0,25$, L' $\leq (1/0,9)$ x {$FM(I_F, I_{OX})$ - 10 x $(I_{conf}-0,15)$ x [$FM(I_F, I_{OX})$ - $Fm(I_F, I_{OX})$]}.

Encore de préférence :

- quand $I_{conf} \leq 0,15$, L' $\leq FM(I_F, I_{OX})$,
- quand $0,25 \leq I_{conf}$, L' $\leq Fm(I_F, I_{OX})$, et
- quand $0,15 \leq I_{conf} \leq 0,25$, L' $\leq FM(I_F, I_{OX})$ - 10 x $(I_{conf} - 0,15)$ x [$FM(I_F, I_{OX})$ - $Fm(I_F, I_{OX})$],

Comme déjà mentionné ci-dessus, l'oxycombustion présente plusieurs avantages par rapport à l'aérocombustion. La teneur en oxygène du comburant, qui est supérieure ou égale à 50 % vol, est de préférence supérieure ou égale à 70 % vol et encore de préférence supérieure ou égale à 80 % vol et plus de préférence encore supérieure ou égale à 87 % vol.

Suivant une forme d'exécution particulièrement utile, le brûleur est un brûleur tube dans tube. Ce type de brûleur comporte un injecteur avec un tube central pour l'alimentation en combustible, ce tube central étant positionné à l'intérieur d'un deuxième tube avec création d'un passage annulaire pour l'alimentation en comburant, ledit passage annulaire étant situé autour du tube central. Le combustible sort alors de l'injecteur par une section centrale de l'ouverture de sortie de l'injecteur et le comburant sort de l'injecteur par une section annulaire située autour de la section centrale dans l'ouverture de sortie de l'injecteur.

La puissance du brûleur est de préférence de 0,1 à 500 kW.

Selon une variante préférée du procédé, le brûleur comporte des moyens pour conférer une rotation au comburant et/ou au combustible à la sortie de l'injecteur, le brûleur étant de préférence un brûleur tube dans tube comportant un foret à l'intérieur du tube central pour le combustible.

Dans ce cas, le procédé peut notamment mettre en oeuvre un brûleur du type décrit dans US-A-6431467 au nom d'American Air Liquide. Ce type de brûleur comprend plus particulièrement :

- un premier conduit pour le passage du comburant,
- un second conduit coaxial au premier conduit et placé à l'intérieur dudit premier conduit pour le passage du combustible,
- un embout placé à l'extrémité du premier conduit,
- une buse placée à l'extrémité du second conduit,
- un moyen permettant de faire tourbillonner le comburant placé sur la buse placée à l'extrémité du second conduit.

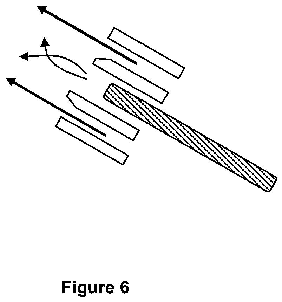

Selon cette variante, le moyen permettant de faire tourbillonner le comburant peut comprendre un objet de forme allongée centrée de manière aérodynamique à l'intérieure de la buse du second conduit, le diamètre interne de ladite buse étant supérieur au diamètre de l'objet de forme allongée du moyen permettant de faire tourbillonner le comburant. L'objet de forme allongée peut être constitué d'au moins une tige hélicoïdale (foret) sur une portion de sa longueur. L'injecteur d'un tel brûleur est représenté schématiquement dans la figure 6.

Selon cette variante, le brûleur peut également comprendre un moyen permettant de faire tourbillonner le comburant placé sur l'embout placé à l'extrémité du premier conduit ; ce moyen permettant de faire tourbillonner le comburant peut être constitué d'un ressort hélicoïdal.

Ce type de brûleur convient particulièrement parce qu'il produit une flamme de longueur constante indépendamment des variations de puissance.

Le procédé suivant l'invention est utile pour différentes applications.

L'invention concerne notamment l'utilisation du procédé tel que défini ci-dessus pour chauffer de la matière fondue dans un canal de distribution, et en particulier pour chauffer du verre fondu à l'intérieur d'un canal de distribution pour le conditionnement du verre.

Dans le procédé suivant l'invention, le brûleur peut en particulier être monté dans une paroi latérale.

Le combustible est typiquement un combustible gazeux, tel que le gaz naturel, le méthane, le propane et le butane. Toutefois, le combustible peut également être un jet fluidisé d'un carburant liquide (atomisé) ou d'un carburant solide pulvérisé.

La longueur L' la plus longue du cône aval est de préférence $\leq 0,4$ m et encore de préférence L' $\leq 0,3$ m.

La présente invention est illustrée ci-après au moyen d'un exemple non-limitatif dans le domaine des canaux de distribution de verre.

Dans un canal où circule un fluide qui nécessite l'apport d'une énergie pour son chauffage, y compris son maintien à température, les caractéristiques du dit fluide (température, viscosité pour exemples) doivent être généralement contrôlées. C'est le cas par exemple pour le verre.

La température du verre qui sort du four de fusion doit être contrôlée avant que le verre n'arrive dans les machines de formage de telle façon à ce que le verre acquiert les propriétés adéquates pour sa mise en forme, telle que la viscosité pour exemple. Des canaux de distribution, appelés aussi «Feeders» ou «ForeHearth» en termes anglo-saxons, sont utilisés pour acheminer le verre entre la sortie du four de fusion et l'entrée des machines de formage.

Ces canaux de distribution disposent de systèmes de chauffage permettant d'apporter l'énergie nécessaire au verre tout au long de son cheminement. Etant donné que le verre se refroidit principalement sur les extrémités des canaux de distribution, par contact avec les matériaux réfractaires constituant les canaux de distribution, il est nécessaire de transmettre l'énergie de chauffage principalement aux extrémités des canaux de distribution pour pallier ces déperditions.

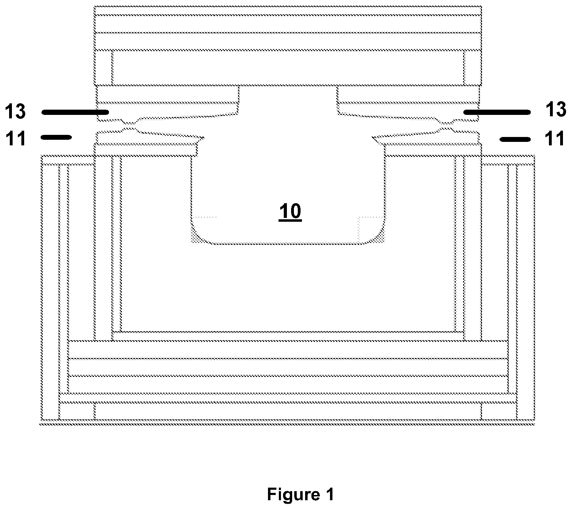

Comme illustré dans la figure 1, les systèmes de chauffage communément utilisés dans les canaux de distribution de verre 10 sont des brûleurs 11 montés dans les parois latérales du canal. L'injecteur desdits brûleurs 11 est situé en retrait à l'intérieur d'un bloc ouvreau 13 (voir figure 2).

Selon les caractéristiques techniques du procédé (température du verre par exemple) qui peuvent être différentes d'un site industriel à un autre, et selon le nombre de brûleurs 11 qui sera utilisé pour une zone de canal 10 considérée, il pourra être nécessaire d'utiliser les brûleurs à puissances différentes pour une même géométrie de bloc donnée.

Grâce à l'oxycombustion, la température de la flamme est plus importante, le transfert radiatif est plus intense et s'exerce dans une gamme de longueurs d'onde qui peut être davantage propice à l'absorptivité du verre ; l'ensemble de ces éléments contribue à une amélioration du transfert thermique entre la flamme et le verre par rapport à un système analogue d'aérocombustion.

Le bon fonctionnement des canaux de distribution de verre impose plusieurs critères en ce qui concerne la puissance et la forme de la flamme.

Ainsi, si la flamme est trop courte et reste essentiellement à l'intérieur de la chambre du bloc, le verre sera insuffisamment chauffé.

A contrario, si la flamme est trop longue, la zone la plus chaude de la flamme se trouve alors située au-delà de l'extrémité du canal (ou rive), ceci a pour conséquence que le transfert thermique sur les rives est atténué.

Un autre effet négatif dans le cas d'une flamme trop longue peut consister en une interaction des flammes opposées, ce qui peut se traduire par une surchauffe et une dégradation de la voûte du canal.

L'homme du métier sélectionnera par conséquent, pour le chauffage du verre fondu dans les canaux de distribution, les oxybrûleurs permettant d'éviter les problèmes ci-dessus.

Toutefois, comme expliqué ci-dessus, l'oxycombustion présente des problèmes de durabilité et de fiabilité pour le bloc et/ou pour le brûleur.

La présente invention permet à l'homme du métier de réaliser des brûleurs, et notamment des brûleurs tube dans tube, qui permettent le bon fonctionnement des canaux de distribution de verre et qui sont durables et fiables, et ceci notamment en fonction de la puissance requise et de la géométrie du bloc.

Comme déjà indiqué, l'invention est particulièrement utile en cas de *retrofit.*

En appliquant le procédé suivant l'invention, l'énergie transférée au canal est optimisée. Par ailleurs, le niveau de température du bloc diminue de manière significative pour se situer en dessous de 1500 °C, comme mesuré expérimentalement. Les contraintes thermiques exercées sur le bloc étant diminuées, la durée d'utilisation du bloc est allongée.

Cet état de fait est aussi vrai pour les blocs de grandes longueurs.

En plus d'optimiser le transfert thermique et de diminuer les contraintes sur le bloc, le risque de surchauffe du nez du brûleur et de dégradation du brûleur (bouchage des injections) ou du bloc est aussi réduit.

En effet, lorsque les impulsions des réactifs sont ajustées, les mesures de température ont montré que la température du nez du brûleur diminuait de 100 °C voire davantage pour se situer généralement en dessous de 1150 °C. Les mesures expérimentales ont montré que le risque de formation de suie est généralement augmenté lorsque la température du nez, composé en acier, dépasse 1150 °C.

Un effet remarquable de l'invention consiste en la réduction d'une part du flux thermique radiatif et d'autre part des matières volatiles reçus tous deux dans la chambre du bloc et provenant de la zone de chauffage. Or, comme indiqué précédemment, un dépôt important de matières volatiles dans le bloc peut engendrer une déviation de la flamme si cette dernière entre en contact avec le dit dépôt et a fortiori un risque de détériorer le bloc.

Dans le cas où l'application industrielle nécessitera de faire varier la puissance du brûleur, il est utile d'utiliser la variante de l'invention avec l'usage d'un foret situé dans l'injection de combustible tel que décrit dans le brevet US-A-6029910 « Low firing rate oxy-fuel burner » au nom d'American Air Liquide de façon à ce que l'effet de rotation du gaz permette de maintenir la réaction de combustion dans la même zone spatiale quand la puissance du brûleur varie.

**Revendications**

1. Procédé pour le chauffage d'une matière présente dans une zone de chauffage par combustion d'un combustible avec un comburant au moyen d'un brûleur comportant un injecteur disposé à l'intérieur d'un bloc, le bloc définissant un passage d'entrée et une chambre de brûleur, ledit passage d'entrée ayant une extrémité d'entrée et une extrémité de sortie, le passage d'entrée débouchant par son extrémité de sortie dans la chambre,

   - l'injecteur étant monté dans le passage d'entrée jusqu'à l'extrémité de sortie du passage d'entrée directement en amont de la chambre, **caractérisé en ce que** :
   - le comburant présente une teneur en oxygène $\geq$ 50 % vol,
   - la chambre présente un indice de confinement $I_{conf} \geq 0,10$ avec $I_{conf} = (S/S') \times (L/L') \times (1/(1+ \alpha/100))$, L' étant la longueur la plus longue du cône aval, L étant la longueur la plus courte du cône aval, S étant la section la plus petite du cône aval, S' étant la section du cône aval à sa longueur L la plus courte, et $\alpha$ étant l'angle du cône aval,
- a est de 1° à 16°,
- le combustible est injecté par l'injecteur dans la chambre de brûleur avec une impulsion $I_F$ à la sortie de l'injecteur et le comburant est injecté par l'injecteur dans la chambre du brûleur avec une impulsion $I_{OX}$ à la sortie de l'injecteur de manière à ce que $0,7 \leq I_F \leq 3,6$ et $0,3 \leq I_{OX} \leq 5,1$, pourvu que quand $I_{OX} > 3,8$ alors $I_F \leq 3,3$.

2. Procédé de chauffage suivant la revendication 1, dans lequel $I_F \geq 1,8$.

3. Procédé de chauffage suivant la revendication 1 ou 2, dans lequel $2,3 \leq I_F \leq 3,3$ et $1,8 \leq I_{OX} \leq 3,8$.

4. Procédé suivant l'une des revendications précédentes, dans lequel $I_{conf} \leq 0,35$.

5. Procédé suivant l'une des revendications précédentes, dans lequel :

   - quand $I_{conf} \leq 0,15$, $L' \leq (1/0,8) \times FM(I_F, I_{OX})$,
   - quand $0,25 \leq I_{conf}$, $L' \leq (1/0,8) \times Fm(I_F, I_{OX})$ et
   - quand $0,15 \leq I_{conf} \leq 0,25$, $L' \leq (1/0,8) \times \{PM(I_F, I_{OX}) - 10 \times (I_{conf} - 0,15) \times [FM(I_F, I_{OX}) - FM(I_F, I_{OX})]\}$, avec :$FM(I_F, I_{OX})= 0,6$, et $Fm(I_F, I_{OX})= 0,45$.

6. Procédé suivant la revendication 4, dans lequel :

   - quand $I_{conf} \leq 0,15$, $L' \leq (1/0,9) \times FM(I_F, I_{OX})$
   - quand $0,25 \leq I_{conf}$, $L' \leq (1/0,9) \times Fm(I_F, I_{OX})$ et
   - quand $0,15 \leq I_{conf} \geq 0,25$, $L' \leq (1/0,9) \times \{PM(I_F, I_{OX}) - 10 \times (I_{conf} - 0,15) \times [FM(I_F, I_{OX}) - FM(I_F, I_{OX})]\}$.

7. Procédé suivant la revendication 5, dans lequel :

   - quand $I_{conf} \leq 0,15$, $L' \leq FM(I_F, I_{OX})$
   - quand $0,25 \leq I_{conf}$, $L' \leq FM(I_F, I_{OX})$ et
   - quand $0,15 \leq I_{conf} \leq 0,25$, $L' \leq FM(I_F, I_{OX}) - 10 \times (I_{conf} - 0,15) \times [FM(I_F, I_{OX}) - Fm(I_F, I_{OX})]$.

8. Procédé suivant la revendication précédente, dans lequel la teneur en oxygène du comburant est supérieure ou égale à 70 %vol, de préférence supérieure ou égale à 80 %vol et plus de préférence encore supérieure ou égale à 87 %vol.

9. Procédé suivant l'une quelconque des revendications précédentes, dans lequel le brûleur est un brûleur tube dans tube.

10. Procédé suivant l'une quelconque des revendications précédentes, dans lequel le brûleur a une puissance de 0,1 à 500 kW.

11. Procédé suivant l'une quelconque des revendications précédentes dans lequel le brûleur comporte des moyens pour conférer une rotation au comburant et/ou au combustible à la sortie de l'injecteur.

12. Procédé suivant l'une des revendications précédentes, dans lequel la matière à chauffer est de la matière fondue et de préférence du verre fondu.

13. Procédé suivant la revendication 12, dans lequel la zone de chauffage se situe à l'intérieur d'un canal de distribution et de préférence à l'intérieur d'un canal de distribution de verre.

14. Procédé suivant l'une des revendications précédentes dans lequel le combustible est un combustible gazeux, de préférence choisi parmi le gaz naturel, le méthane, le propane et le butane.

15. Procédé suivant l'une des revendications précédentes, dans lequel $L' \leq 0,4$ m, de préférence $L' \leq 0,3$ m.

**Patentansprüche**

1. Verfahren zum Erhitzen eines Materials, das in einer Erhitzungszone vorhanden ist, durch Verbrennen eines Brennstoffs mit einem Oxidationsmittel mittels eines Brenners, der eine Einspritzdüse umfasst, die im Inneren eines Blocks angeordnet ist, wobei der Block einen Einlassdurchgang und eine Brennerkammer definiert, wobei der Einlassdurchgang ein Einlassende und ein Auslassende besitzt, wobei der Einlassdurchgang mit seinem Auslassende in die Kammer mündet,

   - wobei die Einspritzdüse im Einlassdurchgang bis zum Auslassende des Einlassdurchgangs direkt stromaufwärts der Kammer eingebaut ist, **dadurch gekennzeichnet, dass**:

   - das Oxidationsmittel einen Sauerstoffgehalt von $\geq 50$ Vol.-% aufweist,
   - die Kammer einen Confinement-Index $I_{conf}$ von $\geq 0,10$ aufweist, wobei $I_{conf} = (S/S') \times (L/L') \times (1/(1+\alpha/100))$, wobei L' die längste Länge des stromabwärtigen Kegels ist, L die kürzeste Länge des stromabwärtigen Kegels ist, S der kleinste Querschnitt des stromabwärtigen Kegels ist, S' der Querschnitt des stromabwärtigen Kegels an seiner kürzesten Länge L ist, und $\alpha$ der Winkel des stromabwärtigen Kegels ist,
   - $\alpha$ von 1° bis 16° beträgt,
   - der Brennstoff von der Einspritzdüse mit einem Impuls $I_F$ am Ausgang der Einspritzdüse in die Brennerkammer eingespritzt wird, und das Oxidationsmittel von der Einspritzdüse mit einem Impuls $I_{OX}$ am Ausgang der Einspritzdüse in die Kammer des Brenners eingespritzt wird, derart, dass $0,7 \leq I_F \leq 3,6$ und $0,3 \leq I_{OX} \leq 5,1$, unter der Voraussetzung, dass wenn $I_{OX} > 3,8$, dann $I_F \leq 3,3$.

**2.** Erhitzungsverfahren nach Anspruch 1, wobei $I_F \geq 1,8$.

**3.** Erhitzungsverfahren nach Anspruch 1 oder 2, wobei $2,3 \leq I_F \leq 3,3$ und $1,8 \leq I_{OX} \leq 3,8$.

**4.** Verfahren nach einem der vorstehenden Ansprüche, wobei $I_{conf} \leq 0,35$.

**5.** Verfahren nach einem der vorstehenden Ansprüche, wobei:

- wenn $I_{conf} \leq 0,15$, $L' \leq (1/0,8) \times FM(I_F, I_{OX})$,
- wenn $0,25 \leq I_{conf}$, $L' \leq (1/0,8) \times Fm(I_F, I_{OX})$, und
- wenn $0,15 \leq I_{conf} \leq 0,25$, $L' \leq (1/0,8) \times \{FM(I_F, I_{OX}) - 10 \times (I_{conf} - 0,15) \times [FM(I_F, I_{OX}) - Fm(I_F, I_{OX})]\}$, wobei: $FM(I_F, I_{OX}) = 0,6$, und $Fm(I_F, I_{OX}) = 0,45$.

**6.** Verfahren nach Anspruch 4, wobei:

- wenn $I_{conf} \leq 0,15$, $L' \leq (1/0,9) \times FM(I_F, I_{OX})$
- wenn $0,25 \leq I_{conf}$, $L' \leq (1/0,9) \times Fm(I_F, I_{OX})$, und
- wenn $0,15 \leq I_{conf} \leq 0,25$, $L' \leq (1/0,9) \times \{FM(I_F, I_{OX}) - 10 \times (I_{conf} - 0,15) \times [FM(I_F, I_{OX}) - Fm(I_F, I_{OX})]\}$.

**7.** Verfahren nach Anspruch 5, wobei:

- wenn $I_{conf} \leq 0,15$, $L' \leq FM(I_F, I_{OX})$
- wenn $0,25 \leq I_{conf}$, $L' \leq Fm(I_F, I_{OX})$, und
- wenn $0,15 \leq I_{conf} \leq 0,25$, $L'$ $FM(I_F, I_{OX}) - 10 \times (I_{conf} - 0,15) \times [FM(I_F, I_{OX}) - Fm(I_F, I_{OX})]$.

**8.** Verfahren nach dem vorstehenden Anspruch, wobei der Sauerstoffgehalt des Oxidationsmittels größer oder gleich 70 Vol.-%, bevorzugt größer oder gleich 80 Vol.-% und noch stärker bevorzugt größer oder gleich 87 Vol.-% ist.

**9.** Verfahren nach einem der vorstehenden Ansprüche, wobei der Brenner ein Rohr-in-Rohr-Brenner ist.

**10.** Verfahren nach einem der vorstehenden Ansprüche, wobei der Brenner eine Leistung von 0,1 bis 500 kW besitzt.

**11.** Verfahren nach einem der vorstehenden Ansprüche, wobei der Brenner Mittel umfasst, um dem Oxidationsmittel und/oder dem Brennstoff am Ausgang der Einspritzdüse eine Drehung zu verleihen.

**12.** Verfahren nach einem der vorstehenden Ansprüche, wobei das zu erhitzende Material geschmolzenes Material, und bevorzugt geschmolzenes Glas ist.

**13.** Verfahren nach Anspruch 12, wobei die Erhitzungszone im Inneren eines Verteilerkanals und bevorzugt im Inneren eines Glasverteilerkanals liegt.

**14.** Verfahren nach einem der vorstehenden Ansprüche, wobei der Brennstoff ein gasförmiger Brennstoff ist, bevorzugt ausgewählt aus Erdgas, Methan, Propan und Butan.

**15.** Verfahren nach einem der vorstehenden Ansprüche, wobei $L' \leq 0,4$ m, bevorzugt $L' \leq 0,3$ m.

## Claims

**1.** Method for heating a material present in a heating zone by combustion of a fuel with an oxidant by means of a burner comprising an injector disposed inside a block, the block defining an inlet passage and a burner chamber, said inlet passage having an inlet end and an outlet end, the inlet passage emerging through its outlet end in the chamber,

- the injector being mounted in the inlet passage as far as the outlet end of the inlet passage directly upstream of the chamber,

**characterised in that**:

- the oxidant has an oxygen content $\geq 50\%$ vol,
- the chamber has a confinement index $I_{conf} \geq 0.10$ with $I_{conf} = (S/S') \times (L/L') \times (1(1+ a/100))$, $L'$ being the longest length of the downstream cone, $L$ being the shortest length of the downstream cone, $S$ being the smallest cross section of the downstream cone, $S'$ being the cross section of the downstream cone at its shortest length $L$, and $\alpha$ being the angle of the downstream cone,
- $\alpha$ is from 1° to 16°,
- the fuel is injected by the injector into the burner chamber with an impulse $I_F$ at the outlet of the injector and the oxidant is injected by the injector into the chamber of the burner with an impulse $I_{OX}$ at the outlet of the injector so that $0.7 \leq I_F \leq 3.6$ and $0.3 \leq I_{OX} \leq 5.1$, provided that when $I_{OX} > 3.8$ then $I_F \leq 3.3$.

**2.** Heating method according to claim 1, wherein $I_F \geq 1.8$.

**3.** Heating method according to claim 1 or claim 2, wherein $2.3 \leq I_F \leq 3.3$ and $1.8 \leq I_{OX} \leq 3.8$.

**4.** Method according to any of the preceding claims, wherein $I_{conf} \leq 0.35$.

**5.** Method according to any of the preceding claims, wherein:

- when $I_{conf} \leq 0.15$, $L' \leq (1/0.8) \times FM(I_F, I_{OX})$,
- when $0.25 \leq I_{conf}$, $L' \leq (1/0.8) \times Fm(I_F, I_{OX})$ and
- when $0.15 \leq I_{conf} \leq 0.25$, $L' \leq (1/0.8) \times \{FM(I_F, I_{OX}) - 10 \times (I_{conf} - 0.15) \times [FM(I_F \; I_{OX}) - Fm(I_F, I_{ox})]\}$, with: $FM(I_F, I_{OX}) = 0.6$ and $Fm(I_F, I_{OX}) = 0.45$.

**6.** Method according to claim 4, wherein:

- when $I_{conf} \leq 0.15$, $L' \leq (1/0.9) \times FM(I_F, I_{OX})$
- when $0.25 \leq I_{conf}$, $L' \leq (1/0.9) \times Fm(I_F, I_{OX})$ and
- when $0.15 \leq I_{conf} \leq 0.25$, $L' \leq (1/0.9) \times \{FM(I_F, I_{OX}) - 10 \times (I_{conf} - 0.15) \times [FM(I_F. \; I_{OX}) - Fm(I_F, I_{OX})]\}$.

**7.** Method according to claim 5, wherein:

- when $I_{CONF} < 0.15$, $L' \leq FM(I_F, I_{OX})$
- when $0.25 \leq I_{conf}$, $L' \leq Fm(I_F, I_{OX})$ and
- when $0.15 \leq I_{conf} \leq 0.25$, $L' \leq FM(I_F, I_{OX}) - 10 \times (I_{conf} - 0.15) \times [FM(I_F, I_{OX}) - Fm(I_F, I_{OX})]$.

**8.** Method according to the preceding claim, wherein the oxygen content of the oxidant is greater than or equal to 70% vol, preferably greater than or equal to 80% vol and more preferably still greater than or equal to 87% vol.

**9.** Method according to any of the preceding claims, wherein the burner is a tube-in-tube burner.

**10.** Method according to any of the preceding claims, wherein the burner has a power of 0.1 to 500 kW.

**11.** Method according to any of the preceding claims, wherein the burner comprises means for conferring a rotation on the oxidant and/or on the fuel at the outlet from the injector.

**12.** Method according to any of the preceding claims, wherein the material to be heated is molten material and preferably molten glass.

**13.** Method according to claim 12, wherein the heating zone is situated inside a distribution channel and preferably inside a glass-distribution channel.

**14.** Method according to any of the preceding claims, wherein the fuel is a gaseous fuel, preferably chosen from natural gas, methane, propane and butane.

**15.** Method according to any of the preceding claims, wherein $L' \leq 0.4$ m, preferably $L' \leq 0.3$ m.

**Figure 1**

**Figure 2**

**Figure 3**

Impulsion du comburant (mN)

9,0

7,2

5,4

III

3,6

II

1,8

I

0

Impulsion du combustible (mN)

1,5  2,3  3,1  3,9  4,7  5,5

Figure 4

0,21 − 0,28

0,15 − 0,22

3,6

1,8

0,23 − 0,31

0,18 − 0,25

0

1,5  2,3  3,1  3,9

Figure 5

**Figure 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2735122
- DE 102005005735 A
- US 6431467 A
- US 6029910 A